**Europäisches Patentamt**

**European Patent Office**

**Office européen des brevets**

(19)

(11) Veröffentlichungsnummer: **0 406 636 A1**

## (12) EUROPÄISCHE PATENTANMELDUNG

(21) Anmeldenummer: **90111822.4**

(22) Anmeldetag: **22.06.90**

(51) Int. Cl.⁵: **H02H 9/02**

(30) Priorität: **04.07.89 CH 2485/89**

(43) Veröffentlichungstag der Anmeldung:
**09.01.91 Patentblatt 91/02**

(84) Benannte Vertragsstaaten:
**CH DE FR GB IT LI SE**

(71) Anmelder: **ASEA BROWN BOVERI AG**
**Haselstrasse**
**CH-5401 Baden(CH)**

(72) Erfinder: **Abeln, Angelika, Dr.**
**Mannheimerstrasse 10-12**
**D-6940 Weinheim(DE)**
Erfinder: **Dersch, Helmut, Dr.**
**Chilesteig 45**
**CH-8116 Würenlos(CH)**
Erfinder: **Zeller, Hans Rudolf, Dr.**
**Sonnmatt 102**
**CH-5242 Birr(CH)**

(54) **Strombegrenzer mit Supraleiter.**

(57) Um einen unzulässigen Überstrom z.B. infolge eines Kurzschlusses (13) in einer Leitung (12) eines Wechselstromkreises automatisch zu begrenzen, ist ein Strombegrenzer (10) vorgesehen, bei dem eine Drosselspule (8) in einem Parallelzweig zu einem oxidischen, stark magnetfeldabhängigen Hochtemperatur-Supraleiter (9) mit einer Sprungtemperatur > 40 K geschaltet ist. Der Supraleiter (9) ist innerhalb der Drosselspule (8) angeordnet. In Reihe zur Drosselspule (8) ist ein Spulenvorwiderstand (7) geschaltet, dessen Widerstand $\gg \omega \cdot L$ ist, $\omega =$ Kreisfrequenz einer speisenden Wechselspannungsquelle (2), L = Induktion der Drosselspule (8). Parallel zum Supraleiter (9) kann ein Nebenschlusswiderstand (6) vorgesehen sein.

FIG.1

EP 0 406 636 A1

## STROMBEGRENZER MIT SUPRALEITER

### Technisches Gebiet

Bei der Erfindung wird ausgegangen von einem Strombegrenzer nach dem Oberbegriff des Patentanspruchs 1. Die Erfindung betrifft auch eine Verwendung des Strombegrenzers.

### Stand der Technik

Mit dem Oberbegriff des Patentanspruchs 1 nimmt die Erfindung auf einen Stand der Technik Bezug, wie er aus: British Journal of Applied Physics, J. Phys. D, Vol 7, No. 4, 1 March 1974, S. 491 - 499, R. V. Harrowell: "A new superconducting switch", bekannt ist. Dort ist ein Supraleiter in Reihe mit einem Schutzschalter angeordnet, wobei in einem Parallelzweig zu dieser Reihenschaltung 2 spulen mit einem ohmschen Widerstand in Reihe geschaltet sind. Der Widerstandswert des ohmschen Widerstandes ist gleich dem Widerstandswert des normalleitenden Supraleiters. Eine Spule dient zur Auslösung des Schutzschalters 2 oder 3 Perioden nach Eintritt des Überstromes. Der Supraleiter ist innerhalb der anderen Spule angeordnet, welche zum Halten des Supraleiters in seinem normalleitenden Zustand dient, nachdem dessen Strom den kritischen Stromwert erreicht hat. Der Supraleiter wird bei einem Überstrom unverzögert hochohmig bzw. normalleitend. Er muss in diesem Zustand gehalten werden, bis der Schutzschalter öffnet. Der Übergang vom Supraleitenden in den normalleitenden Zustand ist jedoch nicht scharf, da die kritische Stromdichte im Supraleiter streut.

Im Unterschied dazu dient bei der vorliegenden Erfindung eine den Supraleiter umgebende Spule in einem vergleichsweise hochohmigen Parallelzweig zum Supraleiter zum Triggern des Supraleiters.

Aus der amerikanischen Zeitschrift: J. Appl. Phys. 49 (4), April 1978, S. 2546 - 2550, ist es bekannt, in jeden der drei Leiter eines dreiphasigen Stromnetzes für 145 kV und 2 kA einen Supraleiter einzuschalten und parallel zu diesem einen normal leitenden Nebenschlusswiderstand von 3,65 $\Omega$ vorzusehen. Durch einen kleinen impulsförmigen Anstieg der magnetischen Feldstärke, welcher Anstieg kleiner als die kritische Magnetfeldstärke ist, bei welcher der Supraleiter normalleitend wird, steuert man den Supraleiter in seinen normalleitenden Zustand mit einem Widerstand von 13,5 k$\Omega$. Dies erfolgt etwa 0,06 $\mu$s bevor der Strom durch den Supraleiter seinen kritischen Wert erreicht, bei welchem er (innerhalb 4 $\mu$s) normalleitend wird. Dadurch wird ein maximal möglicher Fehlerstrom von 45 kA auf 20 kA begrenzt, bei einem ersten Spitzenwert von 35 kA. Der Magnet für das pulsierende Magnetfeld kann Supraleitend sein und aus 2 Scheibenspulen bestehen, die oberhalb und unterhalb des Schalt-Supraleiters angeordnet sind. Das Feld muss innerhalb weniger $\mu$s geschaltet werden.

Die Steuerung des Magnetfeldes erfolgt nicht automatisch. Nähere Angaben zur Steuerung fehlen.

Ein ideal homogener Supraleiter wäre selbstauslösend, sobald die kritische Magnetfeldstärke überschritten ist, so dass keine Feld- oder Stromimpulse zur Schaltung erforderlich wären. Im Leiter hat jedoch die kritische Magnetfeldstärke einen Streubereich mit dem Effekt, dass zuerst lokale Bereiche resistiv werden, ohne dass der Strom global begrenzt wird. Dies kann zur thermischen Zerstörung des Leiters führen.

### Darstellung der Erfindung

Die Erfindung, wie sie im Patentanspruch 1 definiert ist, löst die Aufgabe, einen Strombegrenzer der eingangs genannten Art derart weiterzuentwickeln, dass ein präziseres Ansprechen erfolgt.

Ein Vorteil der Erfindung besteht darin, dass durch Triggerimpulse einer Spule ein scharfer Übergang des Supraleiters vom supraleitenden in den normalleitenden Zustand erreicht wird. Für Begrenzer mit einem Grenzstrom von $\geq$ 10 kA genügen Spulen mit wenigen Windungen, um eine magnetische Induktion von 0,1 T zu erzeugen. Bereits kleine Spannungsanstiege führen über eine positive Rückkopplung zum zuverlässigen Schalten des ganzen Leiters.

Besonders vorteilhaft ist diese Triggerung bei Verwendung eines keramischen Hochtemperatursupraleiters, da diese eine sehr stark magnetfeldabhängige kritische Stromdichte aufgewiesen. Bereits bei 0,01 T wird ein starker Abfall derselben beobachtet.

In elektrischer Parallelschaltung zu einem Öffner erfüllt der Supraleiter des Begrenzers seine Begrenzerfunktion nur kurzfristig während der Öffnung des Öffners.

### Kurze Beschreibung der Zeichnungen

Die Erfindung wird nachstehend anhand eines Ausführungsbeispiels erläutert. Es zeigen:

Fig. 1 eine Prinzipdarstellung einer Überstrom-Schutzschaltung mit einem Strombegrenzer und

Fig. 2 ein schematisches Strom-Spannungsdiagramm zur Erläuterung des Schaltverhaltens des Strombegrenzers gemäss Fig. 1.


Wege zur Ausführung der Erfindung


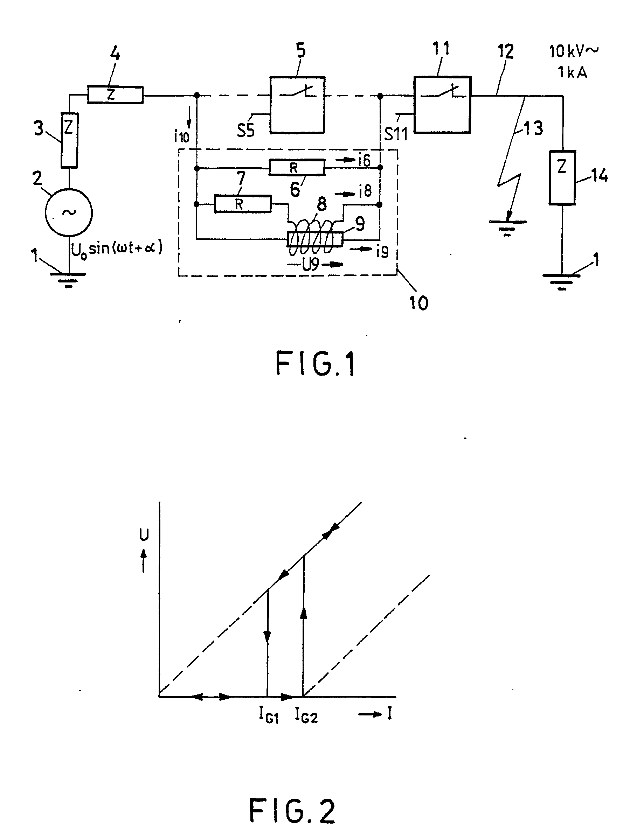

In Fig. 1 ist mit (2) eine einphasige Wechselspannungs quelle bezeichnet, die bezüglich Masse- bzw. Erdpotential (1) eine Spannung $U = U_0 \cdot \sin(\omega t + \alpha)$ über in Reihe geschaltete Schalter bzw. Öffner (5) und (11) und eine mit (12) bezeichnete Leitung an eine geerdete oder mit der Wechselspannungsquelle (2) verbundene Last (14) liefert. $U_0$ bezeichnet die Amplitude der Quellenspannung, $\omega$ deren Kreisfrequenz, t die Zeit und $\alpha$ den Phasenwinkel. Die Öffner (5) und (11) können durch von einer nicht dargestellten Schutzeinrichtung vorgebbare Schaltsignale (S5) bzw. (S11) geöffnet werden. In der nachstehend beschriebenen einfachsten Anwendung (Variante 1) ist der mit gestrichelten Anschlüssen dargestellte Öffner (5) weggelassen. Die Leitung (12) ist z.B. für eine Wechselspannung von 10 kV und einen Wechselstrom von 1 kA ausgelegt. Es versteht sich, dass anstelle einer einphasigen Wechselspannungsquelle (2) z.B. eine dreiphasige vorgesehen sein kann, wenn die Last (14), z.B. eine Maschine oder ein Transformator, einen Drehstrom zum Betrieb erfordert.

(3) bezeichnet die Impedanz der Wechselspannungsquelle (2), (4) die Impedanz der Leitung (12) und (13) einen Kurzschluss der Leitung (12), dessen Kurzschlussstrom durch einen Strombegrenzer (10) begrenzt werden soll.

Der von einem Strombegrenzerstrom (i10) durchflossene Strombegrenzer (10) weist selbst 3 Parallelstromzweige auf. Ein erster Stromzweig mit einem Zweigstrom (i6) wird durch einen Nebenschlusswiderstand (6) gebildet, ein zweiter Stromzweig mit einem Zweigstrom (i8) wird durch einen Spulenvorwiderstand (7) in Reihe zu einer Drosselspule (8) gebildet, und ein dritter Stromzweig mit einem Zweigstrom (i9) wird durch einen Hochtemperatur-Supraleiter (9) gebildet.

Die Drosselspule (8) ist so dimensioniert, dass bei Wechselströmen deren induktiver Widerstand $\omega \cdot L \ll R7$ ist, wobei L die Induktivität der Drosselspule (8) und R7 den totalen Widerstand, bestehend aus dem Spulenvorwiderstand (7) und dem Eigenwiderstand der Drosselspule (8) bedeuten.

Der Supraleiter (9) ist innerhalb der Drosselspule (8) angeordnet. Er hat eine sehr stark magnetfeldabhängige kritische Stromdichte $j_c$, bei deren Überschreiten er resistiv wird. Für eine Stromdichte $j < j_c$ ist der Widerstand des Supraleiters (9) R9 = 0. Für $j \geq j_c$ ist R9 festgelegt durch:

$$U9 = (i9 - I_c) \cdot R_F, \qquad (1)$$

$R_F$ = Magnetfeldwiderstand, d. h. der elektrische Widerstand des Supraleiters im nichtsupraleitenden Zustand. Für nicht zu starke Magnetfelder gilt näherungsweise, wenn man für die Berechnung gemäss

$$I = \int_A j \cdot dA$$

von Stromdichten auf Ströme übergeht,

$$I_c = I_{c0} \exp(-B/B_0), \qquad (2)$$

wobei A den Querschnitt des Supraleiters (9) bezeichnet, für den gilt

$$A = I_{G2}/j_c, \qquad (3)$$

mit $I_{G2}$ = Schaltstrom bzw. oberer Grenzstrom, vergleiche Fig. 2, $I_{c0}$ = kritischer Strom bei fehlendem Magnetfeld, d.h. bei einer magnetischen Induktion B = 0. $B_0$ ist eine die Struktur des Supraleiters kennzeichnende Konstante, die aus einer experimentell ermittelten Kurve von $I_c(B)$ durch Anpassung, d.h. durch Variationen des Parameters erhalten werden kann. $B_0$ ist von der Grössenordnung $10^{-3}$ T - $10^{-1}$ T.

Sowohl $I_c$ wie RF hängen von der magnetischen Induktion B und der Temperatur ab. Der Einfachheit halber nehmen wir an, dass $R_F$ unabhängig von B und i9 ist.

Der Supraleiter (9) ist eine oxidische Keramik mit einer Sprungtemperatur $T_c > 40$ K. Die Selbstinduktivität des Supraleiters (9) soll möglichst klein sein, um ein schnelles Schalten zu erreichen.

Die Strombegrenzeranordnung ist bistabil für einen Bereich des durch den Supraleiter (9) fliessenden Zweigstromes I = i9, für den gilt:

$$(\partial U/\partial B)_{I=konst} > 1/K, \qquad (4)$$

wobei U(B) = U9 die resistive Spannung über dem Supraleiter (9) beim Zweigstrom I bedeutet und K eine Spulenkonstante ist, definiert durch:

$$K = B/U. \qquad (5)$$

Es wird festgelegt:

$$U_c = B_0/K \text{ und} \qquad (6)$$

$$R_{eff}^{-1} = R_F^{-1} + R6^{-1} + R7^{-1}. \qquad (7)$$

Für $I > I_c$ gilt:

$$\begin{aligned} U &= (I - I_c) \cdot R_{eff} \\ &= (I - I_{c0} \exp{-B/B_0}) \cdot R_{eff} \\ &= (I - I_{c0} \exp(-U/U_c)) \cdot R_{eff}. \qquad (8) \end{aligned}$$

Dabei ist $I_{c0} = I_c$ für B = 0.

Führt man dimensionslose Grössen ein, so erhält man mit

$$i = I/I_c, \qquad (9)$$

$$u = U/(R_{eff} \cdot I_c) \text{ und} \qquad (10)$$

$$u_c = U_c/(R_{eff} \cdot I_c) \qquad (11)$$

die universelle Gleichung für den Strom i durch den normalleitenden Supraleiter gemäss

$$i = u + \exp(-u/u_c). \quad (12)$$

Für den verlustfreien Zustand des Supraleiter (9) gilt $u = 0$ für $i \le 1$.

Eine Selbstauslösung bzw. Triggerung des Strombegrenzers tritt ein, wenn die Steigung $(di/du)_{i=1} < 0$ ist. In diesem Fall existiert mit $u \ne 0$ eine Lösung der Gleichung (12) für $i < 1$. Bedingung für die Selbstauslösung ist: $u_c < 1$ oder

$$B_0/(R_{eff} \cdot I_c \cdot K) < 1. \quad (13)$$

Im praktischen Fall ist $R_{eff} \cdot I_c$ in der Grössenordnung von $U_0 = I_{c0} \exp{-B/B_0}) \cdot R_{eff}$, wobei $K > B_0/U_0$ wird. Die magnetische Induktion $B_{max}$ in der Drosselspule (8) bei voller Spannung (in geschaltetem Zustand) muss $> B_0$ sein, vorzugsweise $5 \cdot B_0$, was mit wenigen Windungen leicht zu erreichen ist. Bei der erfindungsgemässen Anordnung ist, wegen der extremen Empfindlichkeit gegenüber Selbstinduktion, darauf zu achten, dass das Eigenfeld des Supraleiters (9) minimal und homogen ist. Andernfalls führen in der Drosselspule (8) induzierte Ströme zu Verlusten. Praktisch ist $B_0$ der Wert von B, bei welchem $I_c$ um den Faktor $e \approx 2,71$ abgefallen ist, gemäss $I_c (B = B_0) = I_{c0}/e$.

Nachstehend werden zwei Dimensionierungsbeispiele wiedergegeben. Für beide wird als Supraleiter (9) ein keramisches Material aus $YBa_2CU_3O_7$. $_x$ mit $j_c = 10^4$ A/cm², $B_0 = 0,01$ T und ein spezifischer Widerstand $\rho_F = 10^{-3}$ Ωcm verwendet. Der Nennstrom $I_N$ beträgt 1 kA, die Spannung $U = 10$ kV und ein Reststrom $I_R$ im Supraleiter (9) in seinem normalleitenden Zustand soll 100 A betragen. Ferner gelten folgende Werte:
Leiterquerschnitt $A = I_{G2}/j_c = 0,1$ cm²,
Leiterlänge $I = (U/I_R) \cdot (A/\rho_F) = 100$ m,
$R_F = U/I_R = 100$ Ω,
$R_{eff} = U/I_N = 10$ Ω und somit $(R7^{-1} + R6^{-1})^{-1} = 11,1$ Ω.

Beispiel 1:

$R7 = 100$ Ω, $R6 = 12,5$ Ω. Aus Gleichung (13) folgt $K > 10^{-6}$ T/V, vorzugsweise ist $K = 5 \cdot 10^{-6}$ T/V.

Für eine lange Zylinderspule gilt:
$$K = (\mu_0 \cdot n)/(I_{Sp} \cdot R7), \quad (14)$$
$\mu_0$ = Permeabilität des Vakuums, n = Zahl der Windungen, $I_{Sp}$ = Spulenlänge.

Mit $R7 = 100$ Ω folgt für $n/I = 400$ Windungen/m.

Beispiel 2:

Mit $R6 = \infty$ und $R7 = 11,1$ Ω, übrige Parameter wie in Beispiel 1, folgt: $n/I = 44,2$ Windungen/m.

Grobe Abschätzung der Selbstinduktion:
Für eine Toroidspule gilt:
$$L = \pi \cdot \mu_0 \cdot n^2 \cdot a^2/I_{Sp}, \quad (15)$$
a = Spulenradius. Da $R7 \le 100$ Ω ist, folgt mit
$\omega = 2 \cdot \pi \cdot 50$ s⁻¹:
$L \ll R/ = 1/\pi = 0,318$ Wb/A, d.h.
$\mu_0 \cdot n^2 \cdot a^2/I_{Sp} \ll 1$.

Mit $I_{Sp} = 1$ m, a = 0,1 m und n = 400 (Beispiel 1) wird
$\mu_0 \cdot n^2 \cdot a^2/I_{Sp} = 2 \cdot 10^{-3}$
und damit $\ll 1$, wie gefordert.

Die Schaltzeit $\tau$ ist gegeben durch:
$\tau = L/R7 = 6,3 \cdot 10^{-3} \cdot 10^{-2}$ s = 63 μs. Mit den Werten des Beispiels 2 wird $L = 7,7 \cdot 10^{-5}$ Wb/A und $\tau = 7$ μs.

Die Wirkungsweise des Strombegrenzers wird nachstehend in Verbindung mit den Fig. 1 und 2 erläutert. In Fig. 2 sind auf der Abszisse der Strom I und auf der Ordinate die resistive Spannung U aufgetragen. ($I_{G1}$)bezeichnet einen unteren Grenzstrom. Die gestrichelte Gerade rechts oberhalb von $I_{G2}$ entspricht dem effektiven Widerstandswert $R_{eff} = (R7^{-1} + R_F^{-1})^{-1}$.

Wenn der Strombegrenzerstrom (i10) z.B. bedingt durch den Kurzschluss (13) den kritischen Stromwert $I_c$ überschreitet, so wird der Supraleiter (9) resistiv und damit wird $|U9| > 0$. Dadurch entsteht ein Zweigstrom (i8) durch die Drosselspule (8). Infolge eines Anstiegs der magnetischen Induktion B innerhalb der Drosselspule (8) wird in dem Supraleiter (9) dessen kritische Stromdichte $j_c$ herabgesetzt. Dadurch wird der Strom vom Stromzweig durch den Supraleiter (9) auf die Stromzweige durch den Nebenschlusswiderstand (6) und die Drosselspule (8) kommutiert. Das entspricht einer positiven Rückkopplung und bewirkt, dass die Spannung U9 an R9 sprunghaft ansteigt, entsprechend dem Widerstandswert $R9 = R_F$. Sinkt der Strombegrenzerstrom (i10), so wird die magnetische Induktion B innerhalb der Drosselspule (8) geringer, mit der Wirkung, dass sich die kritische Stromdichte $j_c$ des Supraleiters (9) erhöht und dieser bei dem unteren Grenzstrom ($I_{G1}$) supraleitend wird, vorausgesetzt, dass seine Temperatur $T < T_c$ ist.

Bei einer Anwendung (Variante 2) des Strombegrenzers (10) in Parallelschaltung zum Öffner (5) wird der Strombegrenzer (10) erst durch das Öffnen des Öffners aktiviert. Bei einem Ausfall des Supraleiters (9) kann der Strom in einem Primärkreis immer noch fliessen, jedoch unter Verlust der Schutzfunktion des Strombegrenzers.

Beim Detektieren eines Kurzschlusses (13) wird der Öffner (5) durch ein Schaltsignal (55) innerhalb 1 ms geöffnet und kann nach 2 ms - 3 ms ca. 10 kV Wechselspannung tragen. Der Supraleiter (9) soll, solange die Spannungsfestigkeit des Öffners (5) noch klein ist, praktisch den ganzen Strom tragen bzw. führen und ihn dann nach Erreichen eines Maximalstromes $I_{max}$, entsprechend der Induktion $B_{max}$, an die Stromzweige durch den Spulenvorwiderstand (7) und die Drosselspule (8) sowie durch den Nebenschlusswiderstand (6) kommutieren. Im Zeitpunkt, zu dem der Öffner (5) öffnet, muss $I < I_{max}$ sein. Auf diese Weise wird der Kurzschlussstrom begrenzt und kann im Bedarfsfall mittels des Schaltsignals (S11) durch den Folgeschalter für den Kurzschluss-Reststrom im zweiten Öffner (11) ganz abgeschaltet werden.

Die Schaltung ist nicht selbstdetektierend; d. h. im Störfall wird der Öffner (5) durch eine externes Signal (S5) geöffnet. Der Supraleiter (9) soll den Strom tragen, bis der Öffner (5) genügend spannungsfestigkeit aufgebaut hat. Durch geeignete Wahl der Selbstinduktion L der Drosselspule (8) lassen sich die gewünschten Schaltverzögerungen im Bereich von 0,5 ms - 5 ms, vorzugsweise im Bereich von 2 ms - 3 ms, erreichen.

**Ansprüche**

1. Strombegrenzer mit mindestens einem Supraleiter (9),

a) der im Bereich des Magnetfeldes mindestens einer Drosselspule (8) angeordnet ist,

b) welche in einem Parallelzweig zu dem mindestens einen Supraleiter (9) vorgesehen und

c) mit einem nicht supraleitenden Spulenvorwiderstand (7) in Reihe geschaltet ist,

dadurch gekennzeichnet,

d) dass die Drosselspule (8) zur Auslösung des normalleitenden Zustandes des Supraleiters so bemessen ist, dass die Beziehung gilt:

$B_0/(R_{eff} \cdot I_c \cdot K) < 1$,

wobei eine Materialkonstante $B_0$ des Supraleiters (9) definiert ist durch den Wert einer magnetischen Induktion B, bei welcher ein kritischer Strom $I_c$ um den Faktor $e \approx 2,71$ abgefallen ist, gemäss

$I_c (B = B_0) = 1/e \cdot I_{c0}$,

$I_{c0}$ = kritischer Strom bei B = 0, $R_{eff}$ = effektiver Widerstand des Strombegrenzers (10),

$K = (\mu_0 \cdot n)/(I_{Sp} \cdot R7)$,

$\mu_0$ = Permeabilität des Vakuums, n = Zahl der Windungen, $I_{Sp}$ = Spulenlänge, R7 = Widerstand eines bzw. des Spulenvorwiderstandes (7).

2. Strombegrenzer nach Anspruch 1, dadurch gekennzeichnet, dass der Widerstandswert (R7) des Spulenvorwiderstandes (7) $\gg \omega \cdot L$ ist, wobei $\omega$ die Kreisfrequenz der Wechselspannungsquelle (2) und L die Induktion der Drosselspule (8) bedeuten.

3. Strombegrenzer nach Anspruch 1 oder 2, dadurch gekennzeichnet,

a) dass der mindestens eine Supraleiter (9) innerhalb der Drosselspule (8) angeordnet ist und

b) dass parallel zu dem mindestens einen Supraleiter (9) ein normalleitender Nebenschlusswiderstand (6) geschaltet ist.

4. Strombegrenzer nach einem der Ansprüche 1 bis 3, dadurch gekennzeichnet, dass der Supraleiter (9) ein stark magnetfeldabhängiger, oxidischer Hochtemperatur-Supraleiter mit einer Sprungtemperatur von > 40 K ist.

5. Strombegrenzer nach Anspruch 5, dadurch gekennzeichnet, dass der Supraleiter (9) ein stark magnetfeldabhängiger, oxidischer Hochtemperatur-Supraleiter mit einer Sprungtemperatur von > 77 K ist.

6. Verwendung eines Strombegrenzers (10) nach einem der Ansprüche 1 bis 5 in elektrischer Parallelschaltung zu einem schnellen Öffner (5), der durch ein externes Schalt- oder Fehlersignal (S5) aktiviert wird, wobei die Selbstinduktion der Spule so dimensioniert wird, dass der Supraleiter (9) erst nach einer vorgebbaren Verzögerungszeit schaltet, wenn der Öffner (5) eine genügende Spannungsfestigkeit erreicht hat.

7. Verwendung eines Strombegrenzers (10) nach Anspruch 6, dadurch gekennzeichnet, dass die Verzögerungszeit im Bereich von 0,5 ms - 5 ms liegt.

FIG.1

FIG.2

89/084

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-3703664 (I-T-E IMPERIAL CORPORATION) <br> * Spalte 2, Zeile 53 - Spalte 5, Zeile 43 * <br> --- | 1 | H02H9/02 |
| D,A | BRITISH JOURNAL OF APPLIED PHYSICS.JOURNAL OF PHYSICS D. <br> vol. 7, no. 4, 01 März 1974, LETCHWORTH GB <br> Seiten 491 - 499; R.V.Harrowell: <br> "A new superconducting switch" <br> * Seiten 491 - 492, Absatz 2 * <br> --- | 1 | |
| D,A | JOURNAL OF APPLIED PHYSICS. <br> vol. 49, no. 4, April 1978, NEW YORK US <br> Seiten 2546 - 2550; K.E.Gray: <br> "A superconducting fault-current limiter" <br> * Seite 2546 * <br> --- | 1 | |
| A | US-A-3381175 (THE ENGLISH ELECTRIC COMPANY) <br> * Spalte 1, Zeile 37 - Spalte 2, Zeile 53 * <br> ----- | 1 | |
| | | | **RECHERCHIERTE SACHGEBIETE (Int. Cl.5 )** |
| | | | H02H <br> H01H <br> H01L <br> H03K |

Der vorliegende Recherchenbericht wurde für alle Patentansprüche erstellt

| Recherchenort | Abschlußdatum der Recherche | Prüfer |
|---|---|---|
| DEN HAAG | 04 OKTOBER 1990 | LIBBERECHT L.A. |